(19) Europäisches Patentamt
European Patent Office
Office européen des brevets

(11) **EP 4 407 342 A1**

(12) **EUROPEAN PATENT APPLICATION**
published in accordance with Art. 153(4) EPC

(43) Date of publication:
**31.07.2024 Bulletin 2024/31**

(21) Application number: **22871485.3**

(22) Date of filing: **15.06.2022**

(51) International Patent Classification (IPC):
**G01S 7/497** (2006.01)

(52) Cooperative Patent Classification (CPC):
**G01S 7/497**

(86) International application number:
**PCT/CN2022/098947**

(87) International publication number:
**WO 2023/045424 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.09.2021 CN 202111113771**

(71) Applicant: **Hesai Technology Co., Ltd.**
**Shanghai 201821 (CN)**

(72) Inventors:
• **YU, Qingguo**
**Shanghai 201821 (CN)**
• **WANG, Lei**
**Shanghai 201821 (CN)**
• **ZHAO, Xin**
**Shanghai 201821 (CN)**
• **XIANG, Shaoqing**
**Shanghai 201821 (CN)**

(74) Representative: **Fish & Richardson P.C.**
**Highlight Business Towers**
**Mies-van-der-Rohe-Straße 8**
**80807 München (DE)**

(54) **PHOTOMASK CONTAMINATION DETECTION METHOD AND PHOTOMASK CONTAMINATION DETECTION SYSTEM FOR LASER RADAR**

(57) A method for light cover stain detection for a LiDAR includes: transmitting a laser pulse; receiving a stray light pulse generated by the laser pulse; and determining, based on a characteristic of the stray light pulse, whether there is a stain on the light cover of the LiDAR. Based on the light cover stain detection method provided in this disclosure, the stain on the light cover is detected using the transmitter unit and the receiver unit in the LiDAR, so there is no need to add additional light source or additional light receiver device, and the structure is simple. Furthermore, the method achieves detection using conditions such as the reasonability of the time window, the peak intensity, the pulse width and the waveform integral value of a waveform obtained by light sensing of the receiver unit as well as a waveform quantity threshold that satisfies the above conditions, so that the detection accuracy is high. The method has a better light cover stain detection effect on a LiDAR with a coaxial transceiver and makes full use of the blind area time of a LiDAR system with a coaxial transceiver to determine whether there is the stain on the light cover of the LiDAR.

10

```
┌─────────────────────────┐
│   Transmit laser pulse  │──── S101
└─────────────────────────┘
             │
┌─────────────────────────┐
│  Receive stray light    │──── S102
│  pulse generated by     │
│  laser pulse            │
└─────────────────────────┘
             │
┌─────────────────────────┐
│  Determine, based on    │──── S103
│  characteristic of stray│
│  light pulse, whether   │
│  there is stain on light│
│  cover of LiDAR         │
└─────────────────────────┘
```

**FIG. 4**

**Description**

This disclosure claims priority to Chinese Patent Application No. 202111113771.8 filed on September 23, 2021, the content of which is incorporated herein by reference in its entirety.

**TECHNICAL FIELD**

This disclosure relates to the field of laser detection, and in particular, to a light cover stain detection method for a LiDAR and a light cover stain detection system for a LiDAR.

**BACKGROUND**

LiDAR is an important sensor for autonomous driving. When an autonomous vehicle is in driving, the LiDAR can encounter weather conditions such as raining, snowing, wind, or sand. In such cases, dust, sewage, mud stains, insect corpses, or the like can be attached to the light cover. As a result, the performance of the LiDAR for ranging and measuring a reflectivity can be reduced or even completely lost, and then the LiDAR cannot acquire environmental information around the autonomous vehicle normally, which leads to a safety risk of the autonomous vehicle. Therefore, a stain on the light cover needs to be detected to warn the autonomous vehicle, so that the autonomous vehicle can make corresponding emergency responses when there is the stain on the light cover.

The existing technical solutions are as follows: First, a fixed light cover stain detection device cannot correspondingly change a detection position as a scanning position of the LiDAR changes, so that a light cover stain detection range is relatively limited. Second, an additional light-emitting device is needed to detect the stain on the light cover, the structure is relatively complicated, the detection accuracy is low, and an incorrect determination easily occurs.

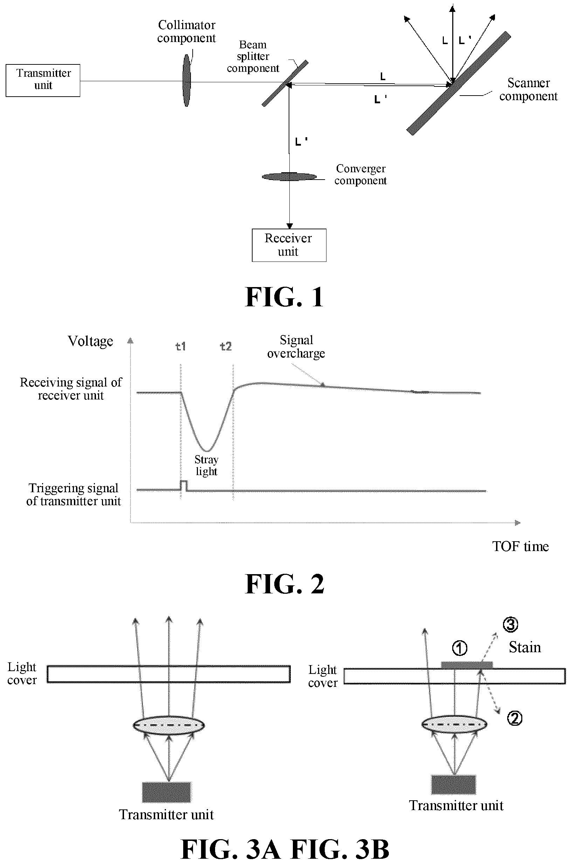

As shown in Fig. 1, a transmitter unit of a LiDAR with a coaxial transceiver emits a detection beam L. The detection beam is collimated by a collimator component, transmitted by a beam splitter component, and scans a target space by a scanner component. An echo L' of the detection beam reflected by an obstacle in the target space is reflected by the scanner component and the beam splitter component and is converged to a receiver unit by a converger component. At almost the same time when the transmitter unit emits the detection beam, that is, within a time window corresponding to the transmitting time point, a large amount of stray light is generated since a component in the LiDAR with a coaxial transceiver system may reflect the detection beam. The stray light is also received by the receiver unit of the LiDAR.

As shown in Fig. 2, when the stray light generated inside the LiDAR system shown in Fig. 1 is too strong, a stray light signal and a detection echo are superimposed, leading to a failure in identification. That is, within a duration (t1-t2) of the stray light, if there is an echo formed from the detection beam reflected by a target, the echo is covered and cannot be distinguished, resulting in a short-range blind area of the LiDAR. Also, an excessively strong stray light signal causes a baseline of the receiver unit to be temporarily raised, for example, signal overcharge shown in the figure, which makes the detection performance of the LiDAR weak within a period of time. Because the above-mentioned problem of the short-range blind area of the LiDAR, and the stain on the light cover is a short-range target, the transmitter unit and the receiver unit in the LiDAR cannot detect the stain on the light cover in the short-range blind area.

The contents of the background section are only technologies known to the declarer and do not necessarily represent the prior art in this art.

**SUMMARY**

To solve the problem of light cover stain detection for a LiDAR, this disclosure provides a light cover stain detection method for a LiDAR, including:

S101: transmitting a laser pulse;
S102: receiving a stray light pulse generated by the laser pulse; and
S103: determining, based on a characteristic of the stray light pulse, whether there is a stain on the light cover of the LiDAR.

Based on one aspect of this disclosure, step S103 further includes:
determining, based on the receiving time of the stray light pulse, whether there is the stain on the light cover of the LiDAR.

Based on one aspect of this disclosure, step S103 further includes:
comparing the receiving time of the stray light pulse with a time window, and in a case that the receiving time of the stray light pulse is within the time window, determining that there is the stain on the light cover of the LiDAR.

Based on one aspect of this disclosure, the time window includes a fixed time window and a dynamic time window.

Based on one aspect of this disclosure, the fixed time window is determined by the geometric size and internal structure of the LiDAR.

Based on one aspect of this disclosure, the dynamic time window is dynamically adjusted based on the receiving time of the stray light pulse.

Based on one aspect of this disclosure, the detection method further includes:

determining, based on a pulse feature parameter of the stray light pulse, whether there is the stain on the light cover of the LiDAR.

Based on one aspect of this disclosure, the pulse feature parameter includes: one or more of peak intensity, pulse width, and waveform integral value of the stray light pulse.

Based on one aspect of this disclosure, the detection method further includes:

in a case that an increment of the pulse feature parameter is greater than a preset threshold, determining that there is the stain on the light cover of the LiDAR, where the increment is calculated based on a pulse feature parameter of the stray light pulse within the time window and a pulse feature parameter of the stray light pulse within the time window when there is no stain on the light cover.

Based on one aspect of this disclosure, the detection method further includes:

determining a position where the stain on the light cover is located based on a scanning position of the LiDAR corresponding to the stray light pulse.

Based on one aspect of this disclosure, the detection method further includes:

in a case that it is determined from a plurality of continuous frames that the stain exists at the same position of the light cover, determining that the position is the position where the stain on the light cover is located.

Based on one aspect of this disclosure, the detection method further includes:

in a case that the quantity of stray light pulses corresponding to the stain on the light cover within a preset angle range is greater than a pulse quantity threshold, determining that there is the stain on the light cover, and taking the preset angle range as a position range where the stain on the light cover is located.

Based on one aspect of this disclosure, the detection method further includes:

in a case that it is determined within the preset angle range from a plurality of continuous frames that there is the stain on the light cover, determining the preset angle range as the position range where the stain on the light cover is located.

Based on one aspect of this disclosure, the detection method further includes:

determining the type of the stain on the light cover based on the increment of the pulse feature parameter.

Based on one aspect of this disclosure, the detection method further includes:

in a case that the increment of the pulse feature parameter is greater than 100%, determining that the stain on the light cover is a reflection-type stain;

in a case that the increment of the pulse feature parameter is greater than 50% and less than 100%, determining that the stain on the light cover is a scattering-type stain; and

in a case that the increment of the pulse feature parameter is less than 50%, determining that the stain on the light cover is an absorption-type stain.

Based on one aspect of this disclosure, the stray light pulse includes an echo formed by reflection of the laser pulse by a device in the LiDAR.

This disclosure also provides a light cover stain detection system for a LiDAR, including:

a transmitter unit, configured to transmit a laser pulse;

a receiver unit, configured to receive a stray light pulse corresponding to the laser pulse and convert a light signal into an electrical signal; and

a light cover stain determinator unit, configured to determine, based on a characteristic of the stray light pulse, whether there is the stain on the light cover of the LiDAR.

Based on one aspect of this disclosure, the light cover stain determinator unit is further configured to:

compare the receiving time of the stray light pulse with a time window, and in a case that the receiving time of the stray light pulse is within the time window, determine that there is the stain on the light cover of the LiDAR.

Based on one aspect of this disclosure, the time window includes a fixed time window and a dynamic time window, where the fixed time window is determined by the geometric size and internal structure of the LiDAR; and the dynamic time window is dynamically adjusted based on the receiving time of the stray light pulse.

Based on one aspect of this disclosure, the light cover stain detection system further includes:

a waveform feature analyzer unit, coupled between the receiver unit and the light cover stain determinator unit and configured to extract a pulse feature parameter of the stray light pulse; and

the light cover stain determinator unit is further configured to:

determine, based on the pulse feature parameter of the stray light pulse, whether there is the stain on the light cover of the LiDAR.

Based on one aspect of this disclosure, the pulse feature parameter includes: one or more of peak intensity, pulse width and waveform integral value of the stray light pulse; and the light cover stain determinator unit is further configured to:
in a case that an increment of the pulse feature parameter is greater than a preset threshold, determine that there is the stain on the light cover of the LiDAR, where the increment is calculated based on a pulse feature parameter of the stray light pulse within the time window and a pulse feature parameter of the stray light pulse within the time window when there is no stain on the light cover.

Based on one aspect of this disclosure, the LiDAR includes a scanner unit, configured to scan the laser pulse transmitted by the transmitter unit to a target space; and the light cover stain detection system further includes:

a position information determination unit, coupled to the transmitter unit and the scanner unit respectively and configured to obtain a scanning position of the LiDAR corresponding to the stray light pulse; and
the light cover stain determinator unit is further configured to:
be coupled to the position information determination unit and determine a position where the stain on the light cover is located based on the scanning position of the LiDAR corresponding to the stray light pulse.

Based on one aspect of this disclosure, the light cover stain determinator unit is further configured to:
in a case that it is determined from a plurality of continuous frames that the stain exists at the same position of the light cover, determine that the position is the position where the stain on the light cover is located.

Based on one aspect of this disclosure, the light cover stain detection system further includes:

an echo quantity counter unit, coupled to the position information determination unit and the light cover stain determinator unit respectively and configured to count the quantity of stray light pulses corresponding to the stain on the light cover within a preset angle range; and
the light cover stain determinator unit is further configured to:
in a case that the quantity of stray light pulses corresponding to the stain on the light cover within the preset angle range is greater than a pulse quantity threshold, determine that there is the stain on the light cover, and take the preset angle range as a position range where the stain on the light cover is located.

Based on one aspect of this disclosure, the light cover stain determinator unit is further configured to:
in a case that it is determined within the preset angle range from a plurality of continuous frames that there is the stain on the light cover, determine the preset angle range as the position range where the stain on the light cover is located.

Based on one aspect of this disclosure, the light cover stain detection system further includes:
a data sampler unit, coupled between the receiver unit and the waveform feature analyzer unit and configured to sample data of the LiDAR echo and send a data signal of the LiDAR echo to the waveform feature analyzer unit.

Based on one aspect of this disclosure, the light cover stain determinator unit includes a multibit storage table, configured as follows:

each column of the multibit storage table correspondingly stores light cover stain determining results within the same preset angle range during continuous multi-frame scanning of the LiDAR; and
each row of the multibit storage table correspondingly stores light cover stain determining results within each preset angle range during single-frame scanning of the LiDAR.

Based on one aspect of this disclosure, the light cover stain determinator unit is further configured to:
in a case that the stored results in the same column of the multibit storage table all represent that there is the stain on the light cover of the LiDAR, determine that there is the stain on the light cover within the preset angle range corresponding to the same column.

The preferred embodiments of this disclosure provide the light cover stain detection method for a LiDAR. The method detects the stain on the light cover using the transmitter unit and the receiver unit in the LiDAR itself, so there is no need to add additional light source or additional light receiver device, and the structure is simple. Furthermore, the method achieves detection using conditions such as the reasonability of the time window, the peak intensity, the pulse width and the waveform integral value of a waveform obtained by light sensing of the receiver unit as well as a waveform quantity threshold that satisfies the above conditions, so that the detection accuracy is high. The method has a better light cover stain detection effect on a LiDAR with a coaxial transceiver and makes full use of the blind area time of a LiDAR system with a coaxial transceiver to determine whether there is the stain on the light cover of the LiDAR.

## BRIEF DESCRIPTION OF THE DRAWINGS

The accompanying drawings are intended to provide a further understanding of this disclosure and form a part of this specification. The accompanying drawings and embodiments of this disclosure are used together to explain this disclosure rather than constituting a limitation on this disclosure. In the drawings:

Fig. 1 shows a LiDAR system with a coaxial transceiver;
Fig. 2 shows a signal overcharge situation of a detector when stray light is too strong;
Fig. 3A shows a light path when there is no stain on the light cover of a LiDAR;
Fig. 3B shows a light path when there is a stain on the light cover of a LiDAR;
Fig. 4 shows a light cover stain detection method for a LiDAR based on an embodiment of this disclosure;
Fig. 5 shows a light path of a light cover stain detection method based on an embodiment of this disclosure;
Fig. 6 shows that a receiver unit first receives stray light inside a system before receiving an echo of a detection beam reflected by a target object;
Fig. 7A shows a time window of stray light inside a system relative to transmitting time point in a non-stain state;
Fig. 7B shows a time window of enhanced stray light inside a system relative to transmitting time point in a stain state;
Fig. 8 shows that a stray light pulse broadens in pulse width in both a light cover stain state and a light cover non-stain state;
Fig. 9 shows a light-emitting channel, a light-emitting sequence, and a scanner component of a LiDAR system for detecting the stain on the light cover based on an embodiment of this disclosure;
Fig. 10 shows a light cover stain detection system based on an embodiment of this disclosure; and
Fig. 11 shows a light cover stain determinator unit based on an embodiment of this disclosure.

## DETAILED DESCRIPTION

Only some exemplary embodiments are briefly described below. As those skilled in the art would realize, the described embodiments may be modified in various different ways all without departing from the spirit or scope of this disclosure. Therefore, the drawings and descriptions are regarded as illustrative in nature and not restrictive.

In the descriptions of this disclosure, it should be understood that orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", and the like are orientations or positional relationships as shown in the drawings, and are only for the purpose of facilitating and simplifying the descriptions of this disclosure instead of indicating or implying that devices or elements indicated must have particular orientations, and be constructed and operated in the particular orientations, so that these terms are not construed as limiting this disclosure. In addition, the terms "first" and "second" are used for descriptive purposes only and are not to be construed as indicating or implying relative importance or to implicitly indicate the number of technical features indicated. Thus, features defined as "first" and "second" explicitly or implicitly include one or more of the features. In the description of this disclosure, "plurality" means two or more, unless otherwise expressly and specifically defined.

In the description of this disclosure, it should be noted that, unless otherwise expressly specified and defined, the terms "mount", "connection", "connect" should be understood in a broad sense, for example, a fixed connection, a detachable connection, integrated connection, a mechanical connection, an electrical connection, communication with one another, direct connection, indirect connection through an intermediate medium, an internal communication between two elements, or an interaction between two elements. For those of ordinary skill in the art, the specific meanings of the aforementioned terms in this disclosure can be understood based on specific conditions.

In this disclosure, unless otherwise explicitly stipulated and restricted, that a first feature is "on" or "below" a second feature may include that the first and second features are in direct contact, or may include that the first and second features are in indirect contact through another feature. In addition, that the first feature is "on", "above", or "over" the second feature includes that the first feature is directly or diagonally above the second feature or merely indicates that a level of the first feature is greater than that of the second feature. The first feature "below", "beneath", and "under" of the second feature indicates that the first feature is directly or diagonally above the second feature or merely indicates that a level of the first feature is less than that of the second feature.

The following disclosure provides many different implementations or examples to implement different structures of this disclosure. To simplify the disclosure of this disclosure, components and settings of specific examples are described below. Of course, they are merely examples and are not intended to limit this disclosure. Furthermore, this disclosure may repeat reference numerals and/or reference letters in different examples. Such repetition is for purposes of simplicity and clarity and does not itself indicate a relationship between the various implementations and/or settings discussed. In addition, this disclosure provides examples of various specific processes and materials, but a person of ordinary skill in the art will recognize the application of other processes and/or the use of other materials.

The embodiments of this disclosure are described below with reference to the drawings. It should be understood that the embodiments described here are only used to illustrate and explain this disclosure and are not intended to limit this disclosure.

A light cover of a LiDAR is arranged outside the LiDAR and is used for protecting devices inside the LiDAR. The light cover allows a detection beam and an echo beam to pass. There are often some surface defects or stains on the light cover of the LiDAR, such as oil, sweat, scratches, stone pits, sewage, dust, dirt, and sediment. These surface defects or stains adversely affects normal detection of the LiDAR.

The stain on the light cover of the LiDAR is classified into three types: an absorption type, a reflection type, and a scattering type. Characteristics of the three types of the stain are explained in detail below with reference to the accompanying drawings. As shown in Fig. 3A, when there is no stain on the light cover of the LiDAR, a transmitter unit transmits a detection beam which exits along a straight line through the light cover of the LiDAR. The detection beam is transmitted to a target space and is reflected by a target object to form a detection echo. The detection echo also enters a receiver unit of the LiDAR. The receiver unit receives the detection echo and converts a light signal into an electrical signal, and a processor analyzes and obtains information such as a distance, a speed, and a reflectivity of the target object. As shown in Fig. 3B, when there are different types of the stain such as oil, sweat, scratches, stone pits, sewage, dust, stains, and sediment on the light cover of the LiDAR, the detection beam transmitted by the transmitter unit often does not exit along a straight line in case of encountering the stain on the light cover. Due to the influences of the different types of the stain, an exiting path of the detection beam is changed. For the absorption-type light cover stain, for example, a point shown in ① in Fig. 3B, the light cover at this point has the absorption-type stain, such as asphalt and paint, and part of the detection beam is absorbed by the absorption-type stain and cannot be formed into an exit beam. For the reflection-type light cover stain, for example, a point as shown in ② in Fig. 3B, the light cover at this point has the reflection-type stain, such as dust and sediment, and part of the detection beam is reflected by the reflection-type stain and cannot be formed into an exit beam, either. For the scattering-type light cover stain, for example, a point as shown in ③ in Fig. 3B, the light cover at this point has the scattering-type stain, such as scratches, stone pits, insect carcass, guano, oil, sweat, fingerprints, sewage, clean water, and light cover corrosion; part of the detection beam is scattered by the scattering-type stain, and an exit beam can pass through the scattering-type stain, but the propagation direction is changed. Typically, the influence of the stain on the light cover on the detection beam is complex, that is, it is accompanied by absorption, reflection, and scattering on the detection beam at the same time.

If there is the stain on the light cover of the LiDAR, the detection beam fails to exit or the propagation direction of the detection beam is changed. The influences on the normal detection of the LiDAR include:

1) The power of the detection beam incident to the target object is weakened, resulting in a decrease in the detection ability and an increase in the loss of point data in a point cloud of the LiDAR.
2) The reflectivity of the target object is calculated based on the optical power, so a decrease in the optical power also leads to a decrease in the accuracy of reflectance measurement.
3) The direction of the beam exiting from the light cover of the LiDAR changes, resulting in inaccurate position information of some point data in the point cloud.
4) The reflection echo of the stain on the light cover causes an increase in noise.

Therefore, this disclosure provides a light cover stain detection method 10 for a LiDAR. The method uses a beam generated by a transmitter unit of the LiDAR itself to generate an echo in a time window corresponding to transmitting time point, as shown in Fig. 2. Within the time window (t1-t2) corresponding to the transmitting time point, a stray light echo generated inside a LiDAR system is used to detect the stain on the light cover. No additional light cover stain detection equipment needs to be added, and no additional detection beam needs to be transmitted to detect the stain on the light cover.

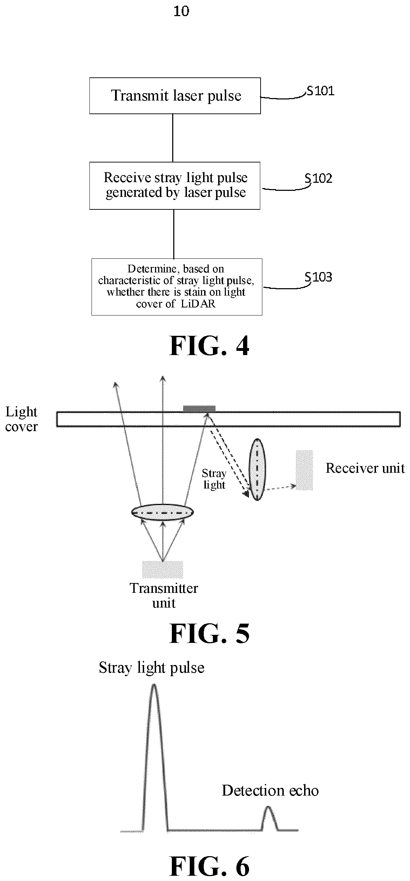

As shown in Fig. 4, based on a preferred embodiment of this disclosure, this disclosure provides a light cover stain detection method 10 for a LiDAR, including steps S101-S103.

In step S101, a laser pulse is transmitted.

As shown in Fig. 5, when a transmitter unit of the LiDAR transmits a detection beam, a stray light is generated inside a LiDAR system. The stray light can be received by a receiver unit of the LiDAR. This disclosure uses the stray light generated inside the system during the transmission of the detection beam to detect and determine the stain on the light cover.

In step S102, a stray light pulse corresponding to the laser pulse is received, and a light signal is converted into an electrical signal.

As mentioned in the background section of this disclosure, the transmitter unit of the LiDAR transmits the detection beam, and the stray light generated inside the LiDAR system can be received by the receiver unit of the LiDAR, thereby forming a stray light pulse. The pulse energy of the stray light pulse is usually high, so that it is hard to distinguish the detection echo from the stray light pulse, and the LiDAR system causes a short-range detection blind area. When the target object is located outside the short-range blind area of the LiDAR, as shown in Fig. 6, after receiving the stray light pulse, the receiver unit may also receive a detection echo pulse formed from the detection beam reflected by the target object. Since an internal structure of the LiDAR system is determined, formation time of the stray light pulse is determined, so that a time window of a waveform of the stray light pulse is fixed. The stray light pulse can be selected from the plurality of echo pulses by receiving a plurality of echo pulses corresponding to the transmitted pulse.

In step S103, whether there is the stain on the light cover of the LiDAR is determined based on a characteristic of the stray light pulse.

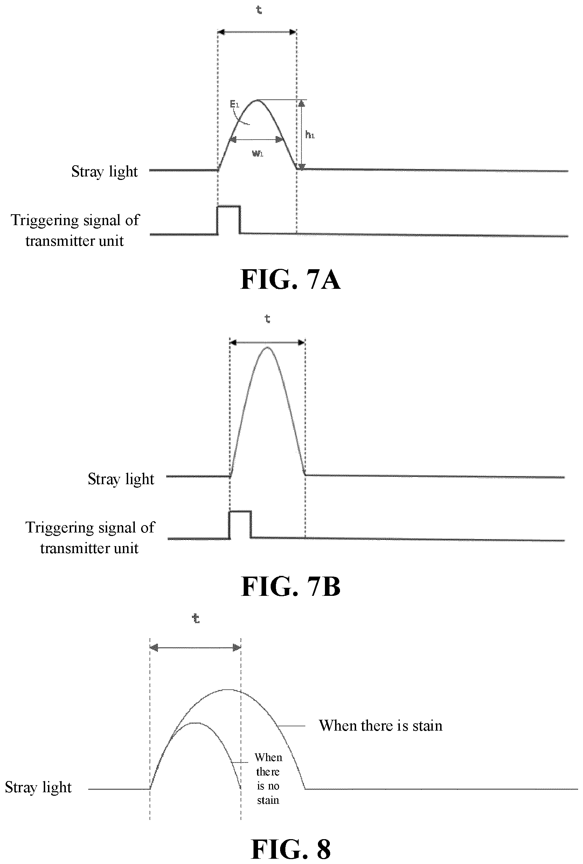

The stray light pulse is generated immediately after the transmitting time point of the LiDAR. As shown in Fig. 7A, the stray light pulse exists within a fixed time window t after a triggering signal of the transmitter unit of the LiDAR is generated. As shown in Fig. 7B, when there is the stain on the surface of the light cover of the LiDAR, due to the influence of the stain on the light cover, part of the detection beam that normally exits in at least one of a non-stain state or the stray light is reflected by the stain on the light cover. Within time t after the triggering signal of the transmitter unit of the LiDAR is generated, an enhanced stray light pulse is formed.

When there is the stain on the light cover of the LiDAR, the stray light is enhanced within the time window t. Therefore, it can be determined, based on whether the stray light pulse is within the above-described time window corresponding to the transmitting time point, whether there is the stain on the light cover of the LiDAR.

This embodiment uses the stray light pulse formed inside the system before the echo pulse formed from the detection beam reflected by the target object to detect the stain on the light cover. No additional light cover stain detection components need to be added, and no detection beam needs to be retransmitted. Furthermore, the blind area time of the LiDAR system is fully used, so that whether there is the stain on the light cover of the LiDAR is determined within the blind area time.

Based on one preferred embodiment of this disclosure, in the light cover stain detection method 10, step S103 further includes:

whether there is the stain on the light cover of the LiDAR is determined based on the receiving time of the stray light pulse.

As shown in Fig. 7A and FIG. 7B, when the stray light pulse is within the time window corresponding to the transmitting time point, it is determined that there is the stain on the light cover of the LiDAR. When the echo pulse is outside the time window corresponding to the transmitting time point, the echo pulse may correspond to an echo formed from the detection beam reflected by the target object, or another interference pulse. When the echo pulse is outside the time window corresponding to the transmitting time point, it cannot be determined that the echo pulse is a stray light pulse, and thus, it cannot be determined, based on the stray light pulse, whether there is the stain on the light cover of the LiDAR.

Based on one preferred embodiment of this disclosure, in the light cover stain detection method 10, step S103 further includes:

Receiving time of the stray light pulse is compared with a time window, and in a case that the receiving time of the stray light pulse is within the time window, it is determined that there is the stain on the light cover of the LiDAR. The time window includes a fixed time window and a dynamic time window.

As shown in Fig. 7A, Fig. 7B, and Fig. 8, comparison between a waveform of the stray light when there is the stain on the light cover of the LiDAR and a waveform of the stray light when there is no stain on the light cover of the LiDAR is shown.

As shown in Fig. 7A and Fig. 7B, based on the comparison between the waveform when there is the stain on the light cover of the LiDAR and the waveform when there is no stain on the light cover of the LiDAR, the stray light pulse is enhanced in amplitude.

As shown in Fig. 8, based on the comparison between the waveform when there is the stain on the light cover of the LiDAR and the waveform when there is no stain on the light cover of the LiDAR, the stray light pulse may broaden to a certain extent in pulse width. Therefore, by setting the dynamic time window, it can be determined that, based on a time range obtained after superimposing the fixed time window with the dynamic time window, whether a stray light pulse exists.

Furthermore, as can be seen in Fig. 7A, Fig. 7B, and FIG. 8, based on the comparison between the waveform when there is the stain on the light cover of the LiDAR and the waveform when there is no stain on the light cover of the LiDAR, a waveform energy integral of the stray light pulse increases.

In the case of the stain on the light cover of the LiDAR, the waveform of the stray light is enhanced, and a pulse duration time may be greater than the time window t (as shown in Fig. 8). Therefore, a certain redundancy can be set, that is, a dynamic time window can be set. In the case of no stain on the light cover, the fixed time window t where the stray light pulse is within is determined by system characteristics and can be obtained through early measurement. When there is the stain on the light cover of the LiDAR, the stray light pulse should be within the time range obtained after superimposing the fixed time window with the dynamic time window, so as to determine whether there is the stain on the light cover of the LiDAR.

For example, the fixed time window where the stray light pulse of the LiDAR is within is determined based on the system characteristics. The system characteristics are determined by the geometric size and internal structure of the LiDAR, specifically including a length of a light path between the transmitter unit and the receiver unit in the LiDAR, a structure and position of an optical device, and the like. If the fixed time window determined based on the system characteristics is within 10 ns after the transmitting time point, the dynamic time window of 20-25 ns can be set, that is, the receiver unit receives the stray light pulse within 30-35 ns after the transmitting time point. This can determine whether there is the stain on the light cover of the LiDAR.

Based on one preferred embodiment of this disclosure, in the light cover stain detection method 10, the dynamic time window is dynamically adjusted based on the receiving time point of the stray light pulse.

As mentioned above, when there is no stain on the light cover, a length of the time window where the stray light pulse is within is determined by the system characteristics of the LiDAR system. Time windows where stray light pulses of different LiDAR systems are within are different.

Since the stray light pulse corresponding to the stain on the light cover is uncertain, the enhancement of the stray light pulse is also uncertain in the case of stain on the light cover. At this time, the dynamic time window can be adjusted based on the over-threshold time and peak time of the stray light pulse to obtain a complete waveform of the stray light pulse, which is convenient for subsequent analysis of waveform information.

Based on one preferred embodiment of this disclosure, the light cover stain detection method 10 further includes: whether there is the stain on the light cover of the LiDAR is determined based on a pulse feature parameter of the stray light pulse.

Preferably, a luminous intensity of the transmitter unit of the LiDAR in one detection is set, and the stray light is received by the receiver unit. When there is the stain on the surface of the light cover, it causes significant changes in the waveform integral value, peak intensity, and pulse width of the stray light received by the receiver unit. The change in the waveform of the stray light can be used to detect whether there is the stain on the light cover of the LiDAR, and the type of the stain on the light cover can be determined based on the amplitude of the change in the waveform.

After the receiver unit of the LiDAR receives the complete waveform of the enhanced stray light pulse in a light cover stain state, the waveform information is analyzed, and it is determined that, based on the pulse feature parameter of the stray light pulse, whether there is the stain on the light cover of the LiDAR.

Based on one preferred embodiment of this disclosure, in the light cover stain detection method 10, the pulse feature parameter includes: one or more of peak intensity, pulse width, and waveform integral value of the stray light pulse.

When there is no stain on the light cover, the pulse feature of the stray light pulse includes the peak intensity, the pulse width, and the waveform integral value, as shown in Fig. 7A. When there is no stain on the light cover, for the stray light pulse, the peak intensity is h1, the pulse width is w1, and the waveform integral value is E1. Based on the system characteristics of the LiDAR, when the above-mentioned pulse features of the stray light pulse, that is, the peak intensity, the pulse width, the waveform integral value, and other waveform information of the stray light pulse, significantly change relative to measured values of the waveform information of the stray light pulse in case of no stain on the light cover, it is determined that there is the stain on the light cover.

The waveform integral value is obtained by integrating the stray light pulse. Preferably, the integral value is obtained by measuring an area of a portion below a pulse width threshold in the waveform of the stray light (those skilled in the art can easily understand that the waveform integral value can also be obtained by measuring an area of the entire pulse or an area of a portion above the pulse width threshold). In the same optical-mechanical system, for the same scanning position and the same laser transmitting channel, since a total amount of the stray light generated by the transmitted beam is fixed, one part of the stray light is received by the receiver unit, and the other part exits through the light cover. When there is the stain on the light cover, due to the blocking effect of the stain on the light cover, a stray light component transmitted through the light cover decreases, and light components, returned by the light cover to the receiver unit, of a normal exit beam and the stray light increase. These components are all superimposed on the waveform of the stray light when there is no stain, causing the waveform of the stray light to change.

Based on one preferred embodiment of this disclosure, the light cover stain detection method 10 further includes:

In a case that an increment of the pulse feature parameter is greater than a preset threshold, it is determined that there is the stain on the light cover of the LiDAR, wherein the increment is calculated based on a pulse feature parameter of the stray light pulse within the time window and a pulse feature parameter of the stray light pulse within the time window in the case of no stain on the light cover. That is:

The increment of the pulse feature parameter =

$$\frac{\text{a relevant parameter of the stray light pulse-a relevant parameter measured in the non-stain state}}{\text{relevant parameter measured in the non-stain state}}$$

When an obtained ratio is greater than a preset threshold, it is determined that there is the stain on the light cover.

The preset threshold can be dynamically adjusted based on an actual measurement situation, and is usually set within 15% -30%.

The pulse feature parameter includes one or more of the waveform integral value, the peak intensity, and the pulse width. When a plurality of pulse feature parameters are used in combination, a method for setting a confidence level ratio can be used. For example: A confidence level of the waveform integral value is set to be 50%; a confidence level of the peak intensity is set to be 30%; and a confidence level of the pulse width is set to be 20%, thus calculating the increments of the pulse feature parameters. In addition, a method for setting a priority can also be used. For example: The priority of the waveform integral value is greater than the priority of the peak intensity, and the priority of the peak intensity is greater than the priority of the pulse width. When it is determined, based on the increment of the waveform integral value, that there is the stain on the light cover, and it is determined, based on the increment of the peak intensity and the increment of the pulse width, that there is no stain on the light cover, a determining result based on the increment of the waveform integral value is used.

In this embodiment, the prediction achieved through the time window is combined with the further determination achieved based on the increment of the pulse feature parameter. When there is the stain on the light cover, the blocking effect and reflection effect of the stain on the light cover cause a change in the waveform of the stray light relative to the waveform when there is no stain, so that whether there is the stain on the light cover of the LiDAR can be determined more accurately based on a change amplitude of the waveform.

Based on one preferred embodiment of this disclosure, the light cover stain detection method 10 further includes:

A position where the stain on the light cover is located is determined based on a scanning position of the LiDAR corresponding to the stray light pulse.

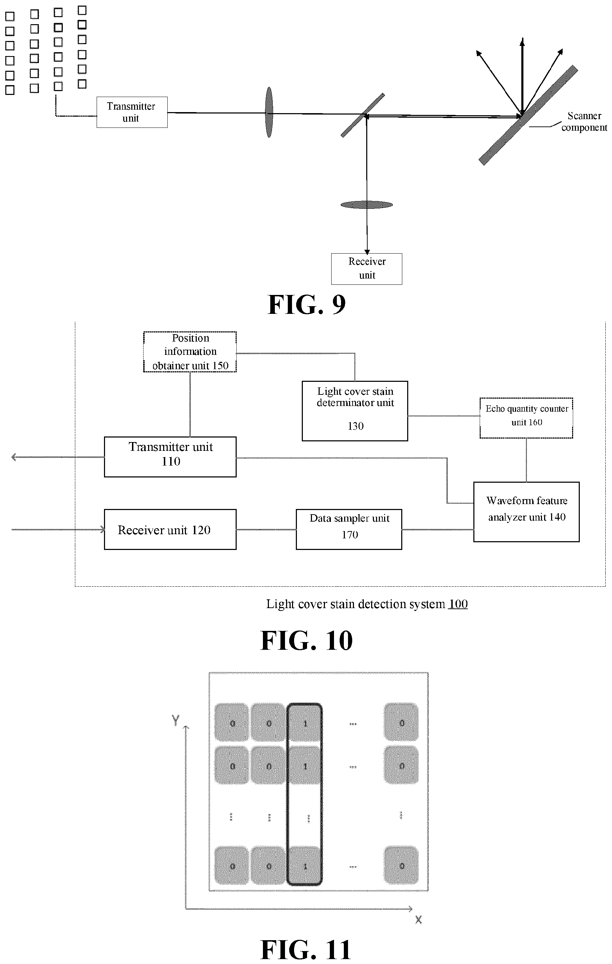

As shown in Fig. 9, the transmitter unit of the LiDAR has lasers arranged in an array. The lasers arranged in the array emit light in turns. For example, six lasers in a first column emit light one by one. After the lasers in the first column complete the detection, six lasers in a second column emit light one by one... The detection beam transmitted by the transmitter unit scans the target space through a scanner component of the LiDAR. The scanner component includes a rotary mirror, a galvanometric scanner, a Micro-electromechanical System ("MEMS") scanning mirror, and the like. A position determination unit is usually provided in the scanner component, and can obtain a position of the laser that transmits the detection beam in real time, that is, a light-emitting channel or light-emitting sequence, and a rotation angle, that is, a horizontal angle, of the scanner component. The position where the stain on the light cover is located can be determined based on angle information obtained by the position determination unit.

The position determination unit obtains the rotation angle of the scanner component and the position of the laser that transmits the detection beam to determine the scanning position of the LiDAR corresponding to the stray light pulse, and then the scanning position is determined as the position or the coverage region where the stain on the light cover is located.

In this embodiment, the position where the stain on the light cover is located is determined based on the scanning position of the LiDAR corresponding to the echo beam, which facilitates subsequent stain cleaning.

Based on one preferred embodiment of this disclosure, the light cover stain detection method 10 further includes:

In a case that it is determined from a plurality of continuous frames that the stain exists at the same position of the light cover, it is determined that the position is the position where the stain on the light cover is located.

To avoid a false alarm caused by a short-range target, considering that the stain on the light cover always exists stably while the short-range target may exist for a short time (e.g., a moving target), a condition for limiting a frame number can be further set. For example, when it is determined from 10 continuous frames that the stain exists at the same position (the same scanning position) of the light cover, it is considered that the stain on the light cover is detected, and the position where the stain on the light cover is located is determined as the scanning position.

Based on one preferred embodiment of this disclosure, the light cover stain detection method 10 further includes:

In a case that the quantity of stray light pulses corresponding to the stain on the light cover within a preset angle range is greater than a pulse quantity threshold, it is determined that there is the stain on the light cover, and the preset angle range is taken as a position range where the stain on the light cover is located.

The stain on the light cover of the LiDAR is not usually distributed at all positions of the light cover, but it is concentrated within an angle range. Therefore, a specific angle range can be set. For example, every 10° is used as an interval, and the quantity of the stray light pulses corresponding to the stain on the light cover within each range of 10° is calculated; and the pulse quantity threshold is set. When the quantity of the stray light pulses corresponding to the stain on the light cover within the range of 10° is greater than the pulse quantity threshold, it is determined that there is the stain on the light cover within the range of 10°. The quantity of the stray light pulses corresponding to the stain on the light cover is determined based on the time window and the increment of the pulse feature parameter mentioned above.

For example, within the scanning range of 10° of the LiDAR, if there are five stray light pulses corresponding to the stain on the light cover, it is considered that there is the stain on the light cover, and an angular position where the stain on the light cover is located is the scanning range of 10°.

Based on one preferred embodiment of this disclosure, the light cover stain detection method 10 further includes:

In a case that it is determined within the preset angle range from a plurality of continuous frames that there is the stain on the light cover, the preset angle range is determined as the position range where the stain on the light cover is located.

Also, to avoid a false alarm caused by a short-range target, a condition for limiting a frame number can be further set. For example, when it is determined from 10 continuous frames that there is the stain on the light cover within the same angle range, it is considered that the stain on the light cover is detected, and the position range of the stain on the light cover is determined as the angle range.

Based on one preferred embodiment of this disclosure, the light cover stain detection method 10 further includes: the type of the stain on the light cover is determined based on the increment of the pulse feature parameter.

Returning to Fig. 3B, for the absorption-type stain at position ①, a reflected echo corresponding to the absorption-type stain is very weak. In the case of the stain on the light cover, the waveform of the stray light is also little enhanced. Compared with the stray light pulse in the case of no stain on the light cover, the pulse feature of the stray light pulse changes little. For the reflection-type stain at position ②, a reflected echo corresponding to the reflection-type stain is strong. In the case of the stain on the light cover, the waveform of the stray light is also enhanced significantly. Compared with the stray light pulse in the case of no stain on the light cover, the pulse feature of the stray light pulse changes significantly. For the absorption-type stain at position (3), a reflected echo corresponding to the absorption-type stain is weak. In the case of the stain on the light cover, the waveform of the stray light is enhanced significantly. Compared with the stray light pulse in the case of no stain on the light cover, the pulse feature of the stray light pulse changes to an extent between the change caused by the reflection-type stain and the change caused by the absorption-type stain. Therefore, the type of the stain on the light cover can be determined based on the increment of the pulse feature corresponding to the stain on the light cover.

Based on one preferred embodiment of this disclosure, the light cover stain detection method 10 further includes: In a case that the increment of the pulse feature parameter is greater than 100%, it is determined that the stain on the light cover is the reflection-type stain. The reflection-type stain includes dirt, sediment, dust, soil, and the like.

In a case that the increment of the pulse feature parameter is greater than 50% and less than 100%, it is determined that the stain on the light cover is the scattering-type stain. The scattering-type stain includes sewage, scratches, stone pits, insect carcass, guano, oil, sweat, fingerprints, clean water, light cover corrosion, and the like.

In a case that the increment of the pulse feature parameter is less than 50%, it is determined that the stain on the light cover is the absorption-type stain. The absorption-type stain includes oil, sweat, asphalt, paint, and the like.

The light cover stain detection method 10 provided in this disclosure uses the beam generated by the transmitter unit (e.g., a semiconductor laser) to detect the stain on the light cover, so that no additional light source needs to be added to detect the stain on the light cover. The three types of the stain mentioned above all reflect the detection beam. The reflection-type stain has the highest reflectivity; the absorption-type stain has the lowest reflectivity; and the scattering-type stain causes partial reflection, with a reflectivity between the reflectivity of the reflection-type stain and the reflectivity of the scattering-type stain. Therefore, the receiver unit (e.g., an avalanche photodiode) of the LiDAR for detecting a target can be used to receive the stray light pulse corresponding to the transmitting time point, and convert the light signal into the electrical signal, then further at least one of the position, distribution, or type of the stain on the light cover are analyzed and obtained based on the waveform information, and the scanning position corresponding to the stray light pulse.

Based on one preferred embodiment of this disclosure, the detection method 10 provided in this disclosure is applied to a LiDAR system with a coaxial transceiver, wherein the stray light pulse includes an echo pulse formed by reflection of the laser pulse by a device in the LiDAR.

In the light cover stain detection method 10 provided in this disclosure, by use of the characteristic of the LiDAR system with a coaxial transceiver that has the short-range blind area, the stray light is determined based on the time window, and whether there is the stain on the light cover is determined based on the changes in the pulse features of the stray light pulse. The detection of the stain on the light cover is completed within the blind area time. No additional light cover stain detection equipment needs to be added, and no additional detection pulse needs to be transmitted, which fully saves hardware and time which are required for detection.

When the transmitter unit of the LiDAR transmits a laser pulse with high light intensity, the light intensity of a stray light signal is also very high, so that the receiver unit is nearly saturated. When the transmitter unit transmits a laser pulse with low light intensity, a peak value, pulse width, and integral value of a waveform of the stray light all increase to a certain extent due to the existence of the stain on the light cover. Therefore, preferably, the light intensity of the transmitter unit of the LiDAR in one detection can be set. For example, a pulse with low light intensity is transmitted at the beginning of a transmitting time window to detect the stain on the light cover.

Based on one preferred embodiment of this disclosure, as shown in Fig. 10, this disclosure also provides a light cover stain detection system 100 for a LiDAR, including a transmitter unit 110, a receiver unit 120, and a light cover stain determinator unit 130.

The transmitter unit 110 is configured to transmit a laser pulse. When the transmitter unit 110 of the LiDAR transmits a detection beam, the stray light is generated inside a LiDAR system. The stray light can be received by the receiver unit 120 of the LiDAR, and a waveform formed by the stray light has a characteristic of a fixed time window. Therefore, this disclosure uses the stray light generated inside the system during the transmission of the detection beam to detect and determine the stain on the light cover.

The receiver unit 120 is configured to receive a stray light pulse corresponding to the laser pulse and convert a light signal into an electrical signal. The transmitter unit of the LiDAR transmits the detection beam, and the stray light generated inside the LiDAR system can be received by the receiver unit 120 of the LiDAR, thereby forming a stray light pulse before an echo pulse is generated by reflecting the detection beam by a target object outside a blind area. Since an internal structure of the LiDAR system is determined, the formation time of the stray light pulse is determined, so that a time window of a waveform of the stray light pulse is fixed. The stray light pulse can be selected from echo pulses corresponding to the transmitted pulse.

The light cover stain determinator unit 130 is configured to determine, based on a characteristic of the stray light pulse, whether there is the stain on the light cover of the LiDAR. The stray light pulse is nearly generated immediately after transmitting time point of the LiDAR. The stray light pulse exists within the fixed time window after a triggering signal of the transmitter unit 110 of the LiDAR is generated. Therefore, it can be determined, based on whether the stray light pulse is within the above-described time window corresponding to the transmitting time point, whether there is the stain on the light cover of the LiDAR. In a state that there is the stain on the surface of the light cover of the LiDAR, the stain on the light cover reflects the detection beam and/or the stray light, so that the stray light pulse is enhanced, and an induced analog signal generated on the receiver unit 120 of the LiDAR is enhanced. That is, waveform features of the stray light pulse such as a waveform integral value, a pulse width, a peak intensity, or the like are enhanced.

Based on one preferred embodiment of this disclosure, in the light cover stain detection system 100, the light cover stain determinator unit 130 is further configured to:

determine, based on the receiving time of the stray light pulse, whether there is the stain on the light cover of the LiDAR.

When the stray light pulse is within the time window corresponding to the transmitting time point, it is determined that there is the stain on the light cover of the LiDAR. When the echo pulse is outside the time window corresponding to the transmitting time point, the echo pulse may correspond to an echo formed from the detection beam reflected by the target object, or another interference pulse. When the echo pulse is outside the time window corresponding to the transmitting time point, it cannot be determined that the echo pulse is a stray light pulse, and thus, it cannot be determined, based on the stray light pulse, whether there is the stain on the light cover of the LiDAR.

Based on one preferred embodiment of this disclosure, in the light cover stain detection system 100, the light cover stain determinator unit 130 is further configured to:

compare the receiving time of the stray light pulse with a time window, and in a case that the receiving time of the stray light pulse is within the time window, determine that there is the stain on the light cover of the LiDAR. The time window includes a fixed time window and a dynamic time window.

When there is no stain on the light cover, the fixed time window where the stray light pulse is within is determined by system characteristics and can be obtained through early measurement. The stray light pulse corresponding to the stain on the light cover is uncertain. Therefore, a certain redundancy can be set, that is, the dynamic time window can be set. When the stray light pulse is within the time obtained by superimposing the fixed time window with the dynamic time window, it is determined that there is the stain on the light cover of the LiDAR.

Based on one preferred embodiment of this disclosure, as shown in Fig. 10, the light cover stain detection system 100 further includes:

a waveform feature analyzer unit 140, coupled between the receiver unit 120 and the light cover stain determinator unit 130 and configured to extract a pulse feature parameter of the stray light pulse; and
the light cover stain determinator unit 130 is further configured to:
determine, based on a pulse feature parameter of the stray light pulse, whether there is the stain on the light cover of the LiDAR.

Based on one preferred embodiment of this disclosure, in the light cover stain detection system 100, the pulse feature parameter includes: one or more of peak intensity, pulse width, and waveform integral value of the stray light pulse, and the light cover stain determinator unit 130 is further configured to:

in a case that an increment of the pulse feature parameter is greater than a preset threshold, determine that there is stain on the light cover of the LiDAR, wherein the increment is calculated based on a pulse feature parameter of the stray light pulse within the time window and a pulse feature parameter of the stray light pulse within the time window when there is no stain on the light cover.

When there is no stain on the light cover, the pulse feature of the stray light pulse includes the peak intensity, the pulse width, and the waveform integral value. Based on the system characteristics of the LiDAR, when the peak intensity, the pulse width, the waveform integral value, and other waveform information of the stray light pulse significantly change relative to measured values of the waveform information of the stray light pulse in case of no stain on the light cover, it is determined that there is the stain on the light cover.

Based on one aspect of this disclosure, in the light cover stain detection system 100, the LiDAR includes a scanner unit, configured to scan the laser pulse transmitted by the transmitter unit 110 to a target space; and the light cover stain detection system 100 further includes:

   a position information determination unit 150, coupled to the transmitter unit 110 and the scanner unit respectively and configured to obtain a scanning position of the LiDAR corresponding to the stray light pulse; and
   the light cover stain determinator unit 130 is further configured to:
   be coupled to the position information determination unit 150 and determine a position where the stain on the light cover is located based on the scanning position of the LiDAR corresponding to the stray light pulse.

Based on the transmitting time point corresponding to the stray light pulse, angle information of the scanner unit of the LiDAR, and a current light-emitting channel, the scanning position of the LiDAR on the light cover at the transmitting time point can be determined. The scanning position is obtained through the position information determination unit 150, and the scanning position information is sent to the light cover stain determinator unit 130. The light cover stain determinator unit 130 determines the position as the position/the coverage region where the stain on the light cover is located.

Based on one preferred embodiment of this disclosure, in the light cover stain detection system 100, the light cover stain determinator unit 130 is further configured to:
in a case that it is determined from a plurality of continuous frames that the stain exists at the same position of the light cover, determine that the position is the position where the stain on the light cover is located.

To avoid a false alarm caused by a short-range target, considering that the stain on the light cover always exists stably while short-range target may exist for short time (e.g., a moving target), a condition for limiting a frame number can be further set. For example, when it is determined from 10 continuous frames that the stain exists at the same position (the same scanning position) of the light cover, it is considered that the stain on the light cover is detected, and the position where the stain on the light cover is located is determined as the scanning position.

Based on one preferred embodiment of this disclosure, as shown in Fig. 10, the light cover stain detection system 100 further includes:

   an echo quantity counter unit 160, coupled to the position information determination unit 150 and the light cover stain determinator unit 130 respectively and configured to count the quantity of stray light pulses corresponding to the stain on the light cover within a preset angle range; and
   the light cover stain determinator unit 130 is further configured to:
   in a case that the quantity of stray light pulses corresponding to the stain on the light cover within the preset angle range is greater than a pulse quantity threshold, determine that there is the stain on the light cover, and take the preset angle range as a position range where the stain on the light cover is located.

The stain on the light cover of the LiDAR is not usually distributed at all positions of the light cover, but it is concentrated within an angle range. Therefore, a specific angle range can be set. For example, every 10° is used as an interval. The angle information is obtained through the position information determination unit 150, and the quantity of the stray light pulses corresponding to the stain on the light cover determined by the light cover stain determinator unit 130 within each range of 10° is counted through the echo quantity counter unit 160; and the pulse quantity threshold is set. When the quantity of the stray light pulses corresponding to the stain on the light cover within the range of 10° is greater than the pulse quantity threshold, it is determined that there is the stain on the light cover within the range of 10°. The light cover stain determinator unit 130 determines, based on the time window and the increment of the pulse feature parameter mentioned above, the quantity of the stray light pulses corresponding to the stain on the light cover.

Based on one preferred embodiment of this disclosure, in the light cover stain detection system 100, the light cover stain determinator unit 130 is further configured to:
in a case that it is determined within the preset angle range from a plurality of continuous frames that there is the stain on the light cover, determine the preset angle range as the position range where the stain on the light cover is located.

A condition for limiting a frame number can be further set. For example, when it is determined from 10 continuous frames that there is the stain on the light cover within the same angle range, it is considered that the stain on the light cover is detected, and the position range of the stain on the light cover is determined as the angle range.

Based on one preferred embodiment of this disclosure, the light cover stain detection system 100 further includes:
a data sampler unit 170, coupled between the receiver unit 120 and the waveform feature analyzer unit 140 and configured to sample data of the LiDAR echo and send a data signal of the LiDAR echo to the waveform feature analyzer unit.

Based on one preferred embodiment of this disclosure, as shown in FIG. 11, in the light cover stain detection system 100, the light cover stain determinator unit 130 includes a multibit storage table, configured as follows:

each column of the multibit storage table correspondingly stores light cover stain determining results within the same preset angle range during continuous multi-frame scanning of the LiDAR; and
each row of the multibit storage table correspondingly stores light cover stain determining results within each preset angle range during single-frame scanning of the LiDAR.

As shown in Fig. 11, a binary number memory is used. In a lengthwise direction (an X direction as shown in the figure) of the binary number memory, each column represents an angle range, such as 0 to 10°, 10° to 20°, ...110° to 120°. In a width direction (a Y direction as shown in the figure) of the binary number memory, each row represents a frame. In the first row in the width direction, when it is represented that the scanner unit of the LiDAR scans a first cycle (the angle range is 120°), the echo quantity counter unit counts an echo quantity corresponding to the stain on the light cover once every 10°. When the echo quantity is greater than a preset threshold, the bit of the memory is stored as 1. When values stored in the same column of a plurality of continuous rows are all 1, it means that the echo quantity corresponding to the stain on the light cover within the preset angle range among the plurality of continuous frames is greater than the preset threshold.

Based on one preferred embodiment of this disclosure, in the light cover stain detection system 100, the light cover stain determinator unit 130 is further configured to:
in a case that the stored results in the same column of the multibit storage table all represent that there is the stain on the light cover of the LiDAR, determine that there is the stain on the light cover within the preset angle range corresponding to the same column.

Preferably, when storage results of a plurality of same columns in a plurality of continuous rows of the multibit binary memory all represent that there is the stain on the light cover, it is determined that there is the stain on the light cover at an average value of a maximum preset angle range corresponding to the plurality of same columns and a minimum preset angle range corresponding to the plurality of same columns.

The light cover stain determinator unit 130, the waveform feature analyzer unit 140, the position information determination unit 150, and the echo quantity counter unit 160 described above can all be completed during signal processing of a field programmable gate array (FPGA), and correspond to corresponding algorithm logics, without adding hardware modules.

The transmitter unit mentioned above includes at least one of the following semiconductor lasers: a vertical-cavity surface-emitting laser ("VCSEL"); and an edge-emitting laser ("EEL"). The receiver unit mentioned above includes at least one of the following detectors: a single photon avalanche diode ("SPAD") detector; an avalanche photo diode ("APD") detector; and a silicon photomultiplier ("SiPM") detector.

The preferred embodiments of this disclosure provide the light cover stain detection method for a LiDAR. The method detects the stain on the light cover using the beams generated by the transmitter unit and the receiver unit in the LiDAR itself, so there is no need to add additional light source or additional light receiver device, and the structure is simple. Furthermore, the method achieves detection using conditions such as the reasonability of the time window, the peak intensity, the pulse width and the waveform integral value of a waveform obtained by light sensing of the receiver unit as well as a waveform quantity threshold that satisfies the above conditions, so that the detection accuracy is high. The method has a better light cover stain detection effect on a LiDAR with a coaxial transceiver and makes full use of the blind area time of a LiDAR system with a coaxial transceiver to determine whether there is the stain on the light cover of the LiDAR.

It should be finally noted that: The foregoing embodiments are merely preferred embodiments of this disclosure, but not intended to limit this disclosure. Although this disclosure is described in detail with reference to the foregoing embodiments, a person of ordinary skill in the art may still make modifications to the technical solutions described in the foregoing respective embodiments or make equivalent replacements to partial technical features thereof. Any modification, equivalent replacement, and improvement made within the spirit and scope of this disclosure shall fall within the protection scope of this disclosure.

## Claims

1. A method for light cover stain detection of a LiDAR, comprising:

S101: transmitting a laser pulse;
S102: receiving a stray light pulse generated by the laser pulse; and

S103: determining, based on a characteristic of the stray light pulse, whether a stain is on the light cover of the LiDAR.

2. The method of claim 1, wherein determining, S103, based on the characteristic of the stray light pulse, whether the stain is on the light cover of the LiDAR comprises:
determining, based on a receiving time of the stray light pulse, whether the stain is on the light cover of the LiDAR.

3. The method of claim 2, wherein determining, S103, based on the characteristic of the stray light pulse, whether the stain is on the light cover of the LiDAR comprises:

   comparing the receiving time of the stray light pulse with a time window; and
   based on a determination that the receiving time of the stray light pulse is within the time window, determining that the stain is on the light cover of the LiDAR.

4. The method of claim 3, wherein the time window comprises a fixed time window and a dynamic time window.

5. The method of claim 4, wherein the fixed time window is determined by the geometric size and internal structure of the LiDAR.

6. The method of claim 4, wherein the dynamic time window is dynamically adjusted based on the receiving time of the stray light pulse.

7. The method of any of claims 1 to 6, wherein determining, S103, based on the characteristic of the stray light pulse, whether the stain is on the light cover of the LiDAR comprises:
determining, based on a pulse feature parameter of the stray light pulse, whether the stain is on the light cover of the LiDAR.

8. The method of claim 7, wherein the pulse feature parameter comprises at least one of peak intensity, pulse width, or waveform integral value of the stray light pulse.

9. The method of claim 7, further comprising:
when an increment of the pulse feature parameter is greater than a predetermined threshold, determining that the stain is on the light cover of the LiDAR, wherein the increment is calculated based on a pulse feature parameter of the stray light pulse within the time window and a pulse feature parameter of the stray light pulse within the time window when no stain is on the light cover.

10. The method of any of claims 1 to 6, further comprising:
determining a position of the stain on the light cover based on a scanning position of the LiDAR corresponding to the stray light pulse.

11. The method of claim 10, further comprising:
based on a determination from a plurality of continuous frames that the stain exists at the same position of the light cover, determining that the position is the position of the stain on the light cover.

12. The method of any of claims 1 to 6, further comprising:
based on a determination that the quantity of stray light pulses corresponding to the stain on the light cover within a preset angle range is greater than a pulse quantity threshold, determining that the stain is on the light cover, wherein the preset angle range is a position range comprising the position of the stain on the light cover.

13. The method of claim 12, further comprising:
based on a determination from a plurality of continuous frames that the stain is on the light cover within the preset angle range, determining the preset angle range as the position range comprising the position of the stain on the light cover.

14. The method of claim 9, further comprising:
determining a type of the stain on the light cover based on the increment of the pulse feature parameter.

15. The method of claim 14, further comprising:

based on a determination that the increment of the pulse feature parameter is greater than 100%, determining that the stain on the light cover is a reflection-type stain;

based on a determination that the increment of the pulse feature parameter is greater than 50% and less than 100%, determining that the stain on the light cover is a scattering-type stain; and

based on a determination that the increment of the pulse feature parameter is less than 50%, determining that the stain on the light cover is an absorption-type stain.

16. A system for light cover stain detection of a LiDAR, comprising:

a transmitter, configured to transmit a laser pulse;

a receiver, configured to receive a stray light pulse corresponding to the laser pulse and convert a light signal into an electrical signal; and

a determinator, coupled to the transmitter and the receiver and configured to determine, based on a characteristic of the stray light pulse, whether a stain is on the light cover of the LiDAR.

17. The system of claim 16, wherein the determinator is further configured to:
compare a receiving time of the stray light pulse with a time window, and based on a determination that the receiving time of the stray light pulse is within the time window, determine that the stain is on the light cover of the LiDAR.

18. The system of claim 17, wherein the time window comprises a fixed time window and a dynamic time window, the fixed time window is determined by a geometric size and an internal structure of the LiDAR, and the dynamic time window is dynamically adjusted based on the receiving time of the stray light pulse.

19. The system of any of claims 16 to 18, further comprising:

a waveform feature analyzer, coupled between the receiver and the determinator and configured to determine a pulse feature parameter of the stray light pulse; wherein
the determinator is further configured to:
determine, based on the pulse feature parameter of the stray light pulse, whether the stain is on the light cover of the LiDAR.

20. The system of claim 19, wherein the pulse feature parameter comprises at least one of peak intensity, pulse width, or waveform integral value of the stray light pulse; and the determinator is further configured to:
based on a determination that an increment of the pulse feature parameter is greater than a preset threshold, determine that the stain is on the light cover of the LiDAR, wherein the increment is calculated based on a pulse feature parameter of the stray light pulse within the time window and a pulse feature parameter of the stray light pulse within the time window when no stain is on the light cover.

21. The system of any of claims 16 to 18, wherein the LiDAR comprises a scanner configured to scan the laser pulse transmitted by the transmitter unit to a target space; and the system further comprises:

a position determinator, coupled to the transmitter and the scanner and configured to determine a scanning position of the LiDAR corresponding to the stray light pulse; and
the determinator is coupled to the position determinator and further configured to:
determine a position of the stain on the light cover based on the scanning position of the LiDAR corresponding to the stray light pulse.

22. The system of claim 21, wherein the determinator is further configured to:
based on a determination from a plurality of continuous frames that the stain exists at the same position of the light cover, determine that the position is the position of the stain on the light cover.

23. The system of claim 21, further comprising:

an echo quantity counter, coupled to the position determinator and the determinator and configured to count the quantity of stray light pulses corresponding to the stain on the light cover within a preset angle range; and
the determinator is further configured to:
based on a determination that the quantity of stray light pulses corresponding to the stain on the light cover within the preset angle range is greater than a pulse quantity threshold, determine that the stain is on the light cover, and determine the preset angle range as a position range comprising the position of the stain on the light cover.

24. The system of claim 23, wherein the determinator is further configured to:
based on a determination that from a plurality of continuous frames that the stain is on the light cover within the preset angle range, determine the preset angle range as the position range comprising the position of the stain on the light cover.

25. The system of any of claims 16 to 18, further comprising:
a data sampler, coupled between the receiver and the waveform feature analyzer and configured to sample data of a LiDAR echo and send a data signal of the LiDAR echo to the waveform feature analyzer.

26. The system of claim 24, wherein the determinator comprises a multibit storage table, and wherein:

each column of the multibit storage table is configured to store light cover stain determination results within the same preset angle range during continuous multi-frame scanning of the LiDAR; and
each row of the multibit storage table is configured to store light cover stain determination results within each preset angle range during single-frame scanning of the LiDAR.

27. The system of claim 26, wherein the determinator is further configured to:
based on a determination that the stored results in the same column of the multibit storage table all represent that the stain is on the light cover of the LiDAR, determine that the stain is on the light cover within the preset angle range corresponding to the same column.

**FIG. 1**

**FIG. 2**

**FIG. 3A FIG. 3B**

10

```
┌─────────────────────────┐
│   Transmit laser pulse   │────  S101
└─────────────────────────┘
            │
┌─────────────────────────┐
│ Receive stray light pulse│────  S102
│  generated by laser pulse│
└─────────────────────────┘
            │
┌─────────────────────────┐
│      Determine, based on       │
│ characteristic of stray light pulse,│────  S103
│  whether there is stain on light │
│      cover of LiDAR        │
└─────────────────────────┘
```

## FIG. 4

Light cover

Stray light

Receiver unit

Transmitter unit

## FIG. 5

Stray light pulse

Detection echo

## FIG. 6

**FIG. 7A**

**FIG. 7B**

**FIG. 8**

Transmitter
unit

Scanner
component

Receiver
unit

## FIG. 9

Position
information
obtainer unit 150

Light cover stain
determinator unit

130

Echo quantity counter
unit 160

Transmitter unit
110

Waveform feature
analyzer unit 140

Receiver unit 120

Data sampler unit
170

Light cover stain detection system 100

## FIG. 10

## FIG. 11

## INTERNATIONAL SEARCH REPORT

| International application No. |
|---|
| **PCT/CN2022/098947** |

| A. | CLASSIFICATION OF SUBJECT MATTER |
|---|---|

G01S 7/497(2006.01)i

According to International Patent Classification (IPC) or to both national classification and IPC

| B. | FIELDS SEARCHED |
|---|---|

Minimum documentation searched (classification system followed by classification symbols)

G01S 7/-

Documentation searched other than minimum documentation to the extent that such documents are included in the fields searched

Electronic data base consulted during the international search (name of data base and, where practicable, search terms used)

CNKI, CNPAT, WPI, EPODOC: 禾赛, 激光, 雷达, 光, 罩, 玻璃, 窗, 壳, 脏, 污, 附着, 泥, 土, 脉冲, 时间, 时区, 区间, 阈值, 幅度, 幅值, 面积, 积分, lidar, radar, laser, optical, light, window, glass, shell, pollution, dirt, dust, attachment, detect, time, threshold, width, pulse, area, integral

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114488095 A (SHANGHAI HESAI TECHNOLOGY CO., LTD.) 13 May 2022 (2022-05-13) <br> description, paragraphs [0066]-[0125] | 1-13, 16-27 |
| X | CN 111551946 A (KYLE OPTICS TECHNOLOGY CO., LTD.) 18 August 2020 (2020-08-18) <br> description, paragraphs [0066]-[0081] and [0097] | 1-13, 16-27 |
| Y | CN 111551946 A (KYLE OPTICS TECHNOLOGY CO., LTD.) 18 August 2020 (2020-08-18) <br> description, paragraphs [0066]-[0081] and [0097] | 14-15 |
| Y | CN 112099045 A (HESAI PHOTONICS TECHNOLOGY CO., LTD.) 18 December 2020 (2020-12-18) <br> description, paragraphs [0086] and [0092] | 14-15 |
| X | JP 2011128112 A (DENSO WAVE INCORPORATED) 30 June 2011 (2011-06-30) <br> description, paragraphs [0015] and [0028]-[0046] | 1-13, 16-27 |
| X | JP 2003114277 A (NISSAN MOTOR CO., LTD.) 18 April 2003 (2003-04-18) <br> description, paragraphs [0009] and [0013]-[0015] | 1-13, 16-27 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 September 2022** | **14 September 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/098947** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2004271404 A (NISSAN MOTOR CO., LTD.) 30 September 2004 (2004-09-30)<br>       entire document | 1-28 |
| A | CN 1113004 A (HYUNDAI ELECTRONICS INDUSTRIES CO., LTD.) 06 December 1995 (1995-12-06)<br>       entire document | 1-27 |

Form PCT/ISA/210 (second sheet) (January 2015)

**INTERNATIONAL SEARCH REPORT**
**Information on patent family members**

International application No.

**PCT/CN2022/098947**

| Patent document cited in search report | | | Publication date (day/month/year) | Patent family member(s) | | | Publication date (day/month/year) |
|---|---|---|---|---|---|---|---|
| CN | 114488095 | A | 13 May 2022 | None | | | |
| CN | 111551946 | A | 18 August 2020 | CN | 111551946 | B | 25 December 2020 |
| CN | 112099045 | A | 18 December 2020 | None | | | |
| JP | 2011128112 | A | 30 June 2011 | JP | 5251858 | B2 | 31 July 2013 |
| JP | 2003114277 | A | 18 April 2003 | JP | 3669320 | B2 | 06 July 2005 |
| JP | 2004271404 | A | 30 September 2004 | JP | 4033005 | B2 | 16 January 2008 |
| CN | 1113004 | A | 06 December 1995 | US | 5623334 | A | 22 April 1997 |
| | | | | KR | 0136547 | B1 | 30 April 1998 |
| | | | | KR | 0136548 | B1 | 30 April 1998 |
| | | | | CN | 1057606 | C | 18 October 2000 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111113771